# EUROPÄISCHE PATENTSCHRIFT

(11) **EP 1 880 182 B1**
(45) Veröffentlichungstag und Bekanntmachung des Hinweises auf die Patenterteilung: **16.02.2011**
(21) Anmeldenummer: 06763135.8
(22) Anmeldetag: 12.05.2006
(51) Int. Cl.: G01M 1/04, F16C 27/02

(54) **ROTORLAGERUNG FÜR EINE AUSWUCHTMASCHINE**
ROTOR BEARING ARRANGEMENT FOR A BALANCING MACHINE
PALIER DE ROTOR POUR UN BANC D'EQUILIBRAGE

(30) Priorität: 13.05.2005 DE 102005023086
(43) Veröffentlichungstag der Anmeldung: 23.01.2008
(73) Patentinhaber: Schenck RoTec GmbH, 64293 Darmstadt (DE)
(72) Erfinder: THELEN, Dieter, 64397 Modautal (DE); MÜLLER, Andreas, 64291 Darmstadt (DE)
(74) Vertreter: Haar, Lucas Heinz Jörn
(86) Internationale Anmeldenummer: PCT/EP2006/062282
(87) Internationale Veröffentlichungsnummer: WO 2006/120249

(56) Entgegenhaltungen:
- DE-C- 302 061
- DE-C- 388 737
- GB-A- 1 350 522
- US-A- 2 329 654
- US-A- 2 461 645

## Beschreibung

Die Erfindung betrifft eine Rotorlagerung für eine Auswuchtmaschine mit einem Lagergehäuse mit horizontaler Lagerhauptachse, wobei das Lagergehäuse in einem Lagerständer hoher Steifigkeit mittels wenigstens zweier, gleichartig ausgebildeter und angeordneter Federelemente radial nachgiebig abgestützt ist, die Federelemente auf entgegengesetzten Seiten des Lagergehäuses symmetrisch zu einer die Lagerhauptachse enthaltenden Ebene angeordnet sind und der Lagerständer zwei in einem Abstand voneinander angeordnete Stützarme hat, zwischen denen das Lagergehäuse angeordnet ist und an denen die Federelemente abgestützt sind.

Bei einer aus US-A-2 461 645 bekannten Rotorlagerung der angegebenen Art ist das Lagergehäuse an zwei Federstäben abgestützt, die sich horizontal und radial zur Lagerhauptachse erstrecken und daher eine in horizontaler Richtung steife und in vertikaler Abstützung weiche Abstützung bilden.

Bei der Gestaltung einer drehbaren Lagerung für das Auswuchten von insbesondere wellenelastischen Rotoren besteht das Bedürfnis, die Einflüsse der Steifigkeit der Lagerung in den radialen Richtungen mit Bezug auf die Lagerhauptachse, um die der Rotor drehbar ist, zu vergleichmäßigen und eine gelenkige Nachgiebigkeit des Lagers um seinen Mittelpunkt zum Ausgleich von Durchbiegungen des Rotors zu ermöglichen.

Eine aus DE 1 240 343 bekannte Rotorlagerung für eine Auswuchtmaschine weist zur Erfüllung der Erfordernisse zwei gleichartig ausgebildete Lagerabstützsysteme auf, deren Wirkungslinien sich im Lagermittelpunkt treffen und die in einer vertikalen Ebene und in einem Winkel von 45° zur Vertikalen in einem starren Lagerständer angeordnet sind. Jedes Lagerabstützsystem besteht aus zwei, durch Federstäbe gebildeten Federpaaren, die das Lagergehäuse auf einer Grundplatte abstützen, und einer Schraubenfeder als elastisches Element, die zwischen der Grundplatte und dem Lagerständer angeordnet ist. Zur Stabilisierung weisen die Lagerstützsysteme außerdem Blattfedern auf, die rechtwinklig zu den Achsen der Federstäbe verlaufen und die Grundplatte elastisch am Lagerständer führen. Außerdem ist das Lagergehäuse in Richtung der Lagerhauptachse mittels Schraubenfedern am Lagerständer abgestützt. Diese bekannte Gestaltung ist sehr aufwendig. Sie bietet nur in der horizontalen und vertikalen radialen Richtung annähernd gleiche Steifigkeit, nicht jedoch in davon abweichenden radialen Richtungen.

Der Erfindung liegt die Aufgabe zugrunde, eine Rotorlagerung der eingangs genannten Art mit verbesserter isotroper Abstützung des Lagergehäuses zu schaffen, die sich durch einen geringen Bauaufwand auszeichnet.

Die Aufgabe wird durch die in Anspruch 1 angegebene Erfindung gelöst. Vorteilhafte Ausgestaltungen der Erfindung sind in den Unteransprüchen angegeben,

Nach der Erfindung ist das Lagergehäuse an jedem Stützarm des Lagerständers mittels zweier in einem Abstand voneinander angeordneter Biegestäbe angestützt. Durch eine solche Gestaltung der Federelemente wird die erfindungsgemäße Lagerung vollständig isotrop, was für den Betrieb einer Auswuchtmaschine insbesondere beim Auswuchten wellenelastischer Rotoren sehr von Vorteil ist. In horizontaler und vertikaler Richtung wird eine gleich steife Abstützung des Lagergehäuses erreicht, wobei die Biegestäbe das Lagergehäuse in oder symmetrisch zu der der jeweiligen Richtung zugeordneten Axialebene an einer sehr hohen, der Fundamentsteifigkeit vergleichbaren Steifigkeit abstützen. Hierdurch können Biegeeinflüsse eliminiert werden, die bei den bekannten Lagerabstützungen einem isotropen Verhalten entgegenwirken. Nach der Erfindung sollte die Steifigkeit des Lagerständers wesentlich, insbesondere wenigstens 10 mal, größer sein als die Steifigkeit der durch die Federelemente gebildeten Abstützung des Lagergehäuses.

Vorzugsweise ist das Lagergehäuse an jedem Stützarm des Lagerständers mittels zweier in einem Abstand voneinander angeordneter Biegestäbe angestützt. Hierdurch wird die Torsionssteifigkeit der Abstützung des Lagergehäuses wesentlich erhöht und der Entstehung von Torsionsschwingungen um eine die Abstützstellen auf den entgegengesetzten Seiten des Lagergehäuses verbindende Achse entgegengewirkt. Je nach gewünschter Steifigkeit der Abstützung kann weiterhin die Zahl der auf entgegengesetzten Seiten des Lagergehäuses angeordneten Biegestäbe variiert werden. Sind beispielsweise Aufnahmen am Lagergehäuse und an den Stützarmen für drei Biegestäbe vorgesehen, lassen sich mit einer einzigen Ausführung der Biegestäbe drei unterschiedliche Steifigkeiten erzielen. Eine weitere Variationsmöglichkeit ergibt sich durch das Bereithalten von Biegestäben unterschiedlicher Steifigkeit.

Zur Aufnahme der Biegestäbe weisen die Stützarme an ihren Enden parallele und symmetrisch zur der zur Lagerhauptachse rechtwinkligen Lagermittelebene angeordnete Trägerplatten auf, die in zur Lagerhauptachse parallelen Bohrungen die Enden der Biegestäbe aufnehmen, welche die Zwischenräume zwischen den Trägerplatten überbrücken. Eine andere vorteilhafte Gestaltungsmöglichkeit ergibt sich, wenn man die Biegestäbe und die Trägerplatten an ihren Enden zu einem integralen Bauteil vereinigt. Zur Abstützung des Lagergehäuses an den Biegestäben sind erfindungsgemäß Paare von Klemmplatten vorgesehen, die an dem Lagergehäuse befestigt sind und zwischen denen die Mittelabschnitte der Biegestäbe durch Klemmen befestigt sind.

Nach einem weiteren Vorschlag der Erfindung ist im Lagergehäuse ein Lagerring angeordnet, der eine Lagerbohrung zur Aufnahme des Rotors und eine sphärische Außenfläche hat und der in einer in bezug auf den Lagermittelpunkt sphärischen Lagerfläche des Lagergehäuses drehbar gelagert ist. Hierdurch wird eine Beweglichkeit der Rotorachse um eine Querachse der Lagerung und eine Präzession der Rotorachse ermöglicht. Zur Verminderung der Reibung kann die sphärische Lagerung des im Lagergehäuse angeordneten Lagerrings als hydrostatisches Gleitlager ausgebildet sein.

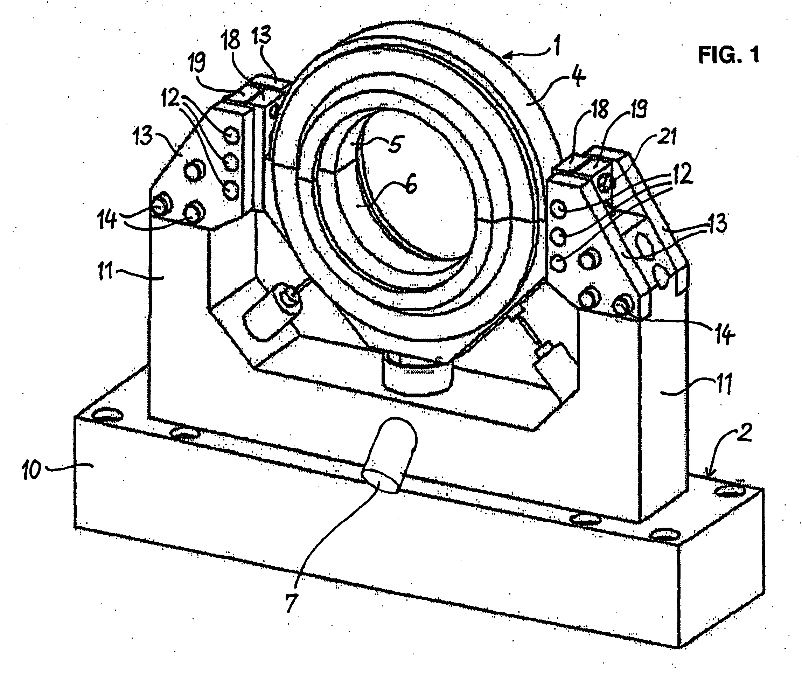

Die Erfindung wird nachfolgend anhand eines Ausführungsbeispiels näher erläutert, das in der Zeichnung dargestellt ist. Es zeigen
- Figur 1: eine perspektivische Darstellung einer Rotorlagerung nach der Erfindung,
- Figur 2: einen Querschnitt durch die Aufnahme der Federelemente der Rotorlagerung gemäß Figur 1 und
- Figur 3: eine perspektivische Darstellung der Aufnahmen der Federele- mente der Rotorlagerung gemäß Figur 1 nach Entfernung einzel- ner Teile.

Die dargestellte Rotorlagerung besteht aus einem Lagergehäuse 1 und einem Lagerständer 2, in dem das Lagergehäuse 1 radial nachgiebig abgestützt ist. Das Lagergehäuse 1 ist in einer die Lagerhauptachse enthaltenden horizontalen Lagermittelebene in eine untere Gehäusehälfte 3 und eine obere Gehäusehälfte 4 geteilt. Die obere Gehäusehälfte 4 ist zur Einlegung eines Rotors in das Lagergehäuse 1 abnehmbar. In dem Lagergehäuse 1 befindet sich ein ebenfalls geteilter Lagerring 5, der eine zylindrische Bohrung 6 zur Aufnahme des zu lagernden Rotors und eine sphärische Mantelfläche hat. Das Lagergehäuse 1 weist eine sphärische Innenfläche auf, in der der Lagerring 5 mit seiner sphärischen Mantelfläche um den Lagermittelpunkt beweglich gelagert ist. Die Lagerung des Lagerrings 5 ist als hydrostatische Lagerung ausgebildet, wobei das Lagergehäuse beiderseits der zur Lagerhauptachse rechtwinkligen radialen Lagermittelebene in symmetrischer Anordnung an eine Druckmittelquelle anschließbare Lagertaschen hat. Das Lagergehäuse 1 weist an seinem unteren Ende einen Auslauf 7 für das an den Lagerspalten der hydrostatischen Lagerung entweichende Druckmittel auf.

Der Lagerständer 2 hat einen massiven Sockel 10, der zur Verankerung auf einem Fundament bestimmt ist. Auf seiner Oberseite weist der Sockel 10 zwei parallele Stützarme 11 auf, die sich senkrecht nach oben bis etwa zur Mitte des Lagergehäuses 1 erstrecken, das in dem Zwischenraum zwischen den Stützarmen 11 angeordnet ist. Das Lagergehäuse 1 ist an den Stützarmen 11 mittels Federelemente in Form von Biegestäben 12 abgestützt. Hierzu sind am Ende eines jeden Stützarms 11 zwei in einem Abstand voneinander und parallel zur radialen Lagermittelebene angeordnete Trägerplatten 13 mittels Schrauben 14 befestigt. Die Trägerplatten 13 ragen jeweils in den Zwischenraum zwischen den Stützarmen 11 hinein und haben an ihren freistehenden Abschnitten jeweils drei zur Lagerhauptachse parallele Bohrungen 15, in denen die Biegestäbe 12 gehalten sind. Die Achsen der Bohrungen 15 liegen jeweils in einer zur Lagerhauptachse parallelen, vertikalen Ebene, und die Bohrungen 15 sind symmetrisch zu der horizontalen Lagermittelebene angeordnet. Da die Trägerplatten 13 bei dem gezeigten Ausführungsbeispiel jeweils drei Bohrungen 15 enthalten, liegen die Achsen der mittleren Bohrungen jeweils in der horizontalen Lagermittelebene und die Achsen der anderen Bohrungen jeweils parallel und im gleichen Abstand von dieser. Es ist aber auch möglich, eine gerade Anzahl von Aufnahmebohrungen in den Trägerplatten vorzusehen. In diesem Fall befinden sich die Bohrungen jeweils in symmetrischer Anordnung beiderseits der horizontalen Lagermittelebene .

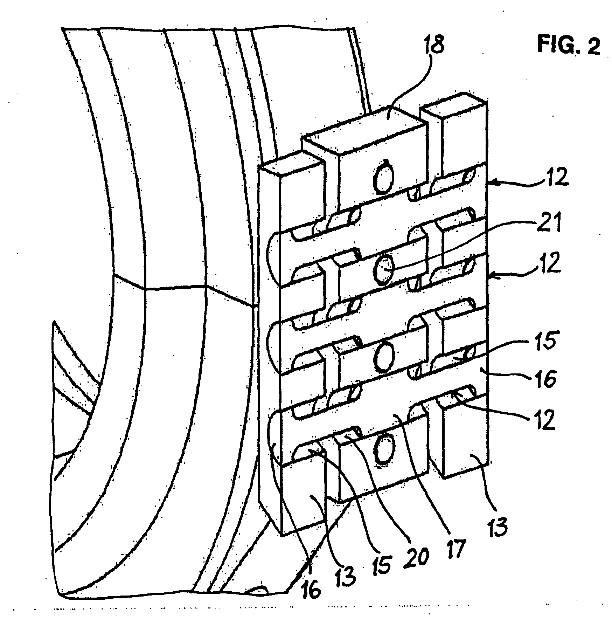

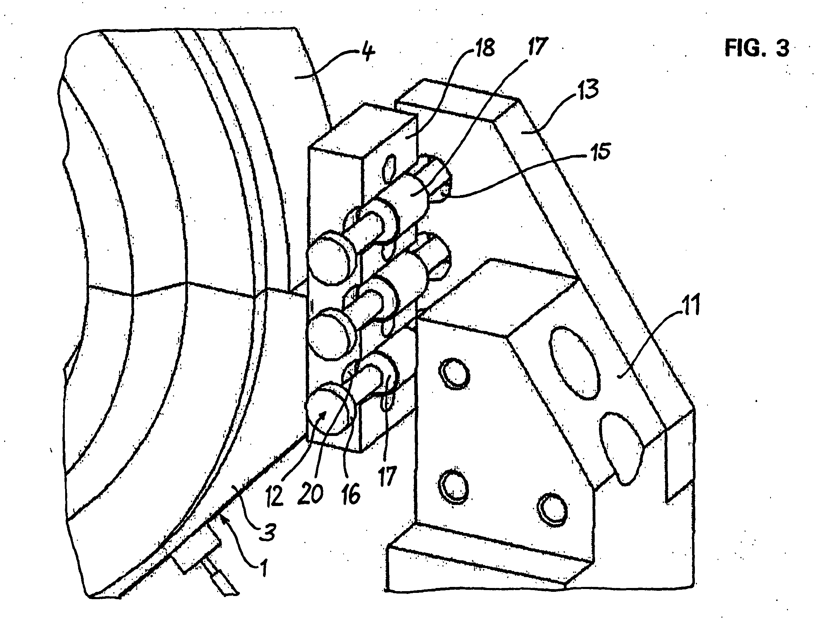

Wie aus den Figuren 2 und 3 zu ersehen, haben die Biegestäbe 12 Endabschnitte 16 größeren Durchmessers, mit denen sie in den Bohrungen 15 beispielsweise mittels Preßsitz gehalten sind. Die Biegestäbe 12 haben außerdem einen Mittelabschnitt 17 größeren Durchmessers, der zur Abstützung des Lagergehäuses dient. Zur Befestigung des Lagergehäuses an den Mittelabschnitten 17 ist auf beiden Seiten des Lagergehäuses 1 jeweils ein Paar paralleler Klemmplatten 18, 19 vorgesehen, die in dem Zwischenraum zwischen den freistehenden Abschnitten der Trägerplatten 13 und in einem Abstand von diesen angeordnet sind und die teilzylindrische Ausnehmungen 20 zur Aufnahme der Mittelabschnitte 17 der Biegestäbe 12 haben. Die Klemmplatten 18 sind derart fest mit der unteren Gehäusehälfte 3 des Lagergehäuses 1 verbunden, daß die Zylinderachsen ihrer mittleren Ausnehmungen 20 in der horizontalen Lagermittelebene liegen. Zum Festklemmen der Mittelabschnitte 17 in den Ausnehmungen 20 sind die einander zugeordneten Klemmplatten 18, 19 mittels Schrauben 21 miteinander verspannt.

Bei der Darstellung in Figur 3 sind die vordere Trägerplatte und die Klemmplatte 19 entfernt, so daß die Ausbildung der Biegestäbe 12 und ihre Aufnahmen gut zu erkennen sind.

Durch die Anordnung und Ausbildung der Biegestäbe 12 wird eine radial nachgiebige Abstützung des Lagergehäuses 1 an dem Lagerständer 2 geschaffen, die in allen radialen Richtungen gleiche Steifigkeit hat, also isotrop ist. Voraussetzung hierfür ist, daß die Abstützung der Biegestäbe 12 an den Stützarmen 11 des Lagerständers 2 eine im Vergleich zur Steifigkeit der durch die Biegestäbe 12 gebildeten Abstützung des Lagergehäuses 1 sehr viel höhere Steifigkeit in allen radialen Richtungen besitzt. So sollte die Steifigkeit der Stützarme 11 des Lagerständers 2 wenigstens um den Faktor 10 größer sein als die Steifigkeit der durch die Biegestäbe 12 gebildeten Abstützung des Lagergehäuses 1.

Die beschriebene Rotorlagerung eignet sich insbesondere für das Auswuchten wellenelastischer Rotoren. Durch die sphärische Lagerung des den Rotor aufnehmenden Lagerrings können Bewegungen des Rotors um eine Querachse und Präzessionsbewegungen der Rotorachse ohne Hervorrufung von Zwangskräften in der Abstützung zugelassen werden. Die isotrope Steifigkeit der Lagerung verhindert eine Aufspaltung der Eigenfrequenzen des Rotors und vereinfacht dadurch das Auswuchten. Ein weiterer Vorteil der beschriebenen Rotorlagerung besteht in der einfachen Möglichkeit, die Steifigkeit der Lagerung an unterschiedliche Erfordernisse anzupassen, indem die Zahl der zur Abstützung des Lagergehäuses verwendeten Biegestäbe variiert wird.

Durch die zur Rotorachse parallele Anordnung der Biegestäbe ist die beschriebene Rotorlagerung auch in der Lage, Kräfte in axialer Richtung ohne nennenswerte Beeinträchtigungen der Lagereigenschaften aufzunehmen, was für manche Auswuchtaufgaben von Vorteil ist. Weiterhin bewirkt die parallele Anordnung der Biegestäbe eine hohe Torsionssteifigkeit der Abstützung, so daß Lagerkräfte der sphärischen Lagerung nicht zur Anregung von Torsionsschwingungen des Lagergehäuses führen.

Die beschriebene Rotorlagerung zeichnet sich ferner durch einen einfachen und kostengünstig herstellbaren Aufbau aus. Im Vergleich zu den bekannten Lösungen sind nur wenige federnde Elemente erforderlich und die bauliche Ausgestaltung der einzelnen Komponenten der Lagerung erfordert keine komplizierten Herstellverfahren. Die Ausbildung des Lagerständers 2 ermöglicht ferner eine günstige Plazierung des Ablaufs des Druckmittels zur Lagerschmierung in der Mitte unter dem Lagergehäuse 1. Auch für die Anordnung der Schwingungsaufnehmer ergibt sich durch die beschriebene Gestaltung ein günstiger Einbauraum zwischen dem Lagergehäuse 1 und dem Sockel 10 des Lagerständers 2. An dieser Stelle sind die Schwingungsaufnehmer durch die sie umgebenden Bauteile geschützt und stören nicht das Ein- und Auslagern eines Rotors.

## Patentansprüche

1. Rotorlagerung für eine Auswuchtmaschine mit einem Lagergehäuse (1) mit horizontaler Lagerhauptachse, wobei das Lagergehäuse (1) in einem Lagerständer (2) hoher Steifigkeit mittels wenigstens zweier, gleichartig ausgebildeter und angeordneter Federelemente radial nachgiebig abgestützt ist, die Federelemente auf entgegengesetzten Seiten des Lagergehäuses (1) symmetrisch zu einer die Lagerhauptachse enthaltenden Ebene angeordnet sind und der Lagerständer (2) zwei in einem Abstand voneinander angeordnete Stützarme (11) hat, zwischen denen das Lagergehäuse (1) angeordnet ist und an denen die Federelemente abgestützt sind, **dadurch gekennzeichnet, daß** die Federelemente Biegestäbe (12) sind, die parallel zur Lagerhauptachse verlaufen und an denen das Lagergehäuse radial zu ihrer Längsachse abgestützt ist.

2. Rotorlagerung nach Anspruch 1, **dadurch gekennzeichnet, daß** die Steifigkeit des Lagerständers (2) wesentlich größer ist als die Steifigkeit der durch die Federelemente gebildeten Abstützung des Lagergehäuses (1).

3. Rotorlagerung nach einem der Ansprüche 1 oder 2, **dadurch gekennzeichnet, daß** das Lagergehäuse (1) an jedem Stützarm (11) des Lagerständers (2) mittels zweier in einem Abstand voneinander angeordneter Biegestäbe (12) angestützt ist.

4. Rotorlagerung nach einem der vorhergehenden Ansprüche, **dadurch gekennzeichnet, daß** die Stützarme (11) an ihren Enden parallele und symmetrisch zur der zur Lagerhauptachse rechtwinkligen Lagermittelebene angeordnete Trägerplatten (13) aufweisen, die in zur Lagerhauptachse parallelen Bohrungen (15) Endabschnitte (16) der Biegestäbe (12) aufnehmen, wobei die Biegestäbe (12) Zwischenräume zwischen den Trägerplatten (13) überbrücken.

5. Rotorlagerung nach einem der vorhergehenden Ansprüche, **dadurch gekennzeichnet, daß** Paare von Klemmplatten (18, 19) vorgesehen sind, die an dem Lagergehäuse (1) befestigt sind und zwischen denen Mittelabschnitte (17) der Biegestäbe (12) durch Klemmen befestigt sind.

6. Rotorlagerung nach einem der vorhergehenden Ansprüche, **dadurch gekennzeichnet, daß** im Lagergehäuse (1) ein Lagerring (5) angeordnet ist, der eine Lagerbohrung (6) zur Aufnahme des Rotors und eine sphärische Außenfläche hat und der in einer in Bezug auf den Lagermittelpunkt sphärischen Lagerfläche des Lagergehäuses (1) drehbar gelagert ist.

7. Rotorlagerung nach Anspruch 6, **dadurch gekennzeichnet, daß** die sphärische Lagerung des Lagerrings (5) als hydrostatisches Gleitlager ausgebildet ist.

## Claims

1. Rotor bearing arrangement for a balancing machine having a bearing housing (1) including a horizontal main axis of the bearing, wherein the bearing housing (1) is supported in a radially resilient manner in a highly stiff bearing stand (2) by means of at least two similarly configured and arranged spring elements, the spring elements are arranged on opposite sides of the bearing housing (1) so as to be symmetrical about a plane containing the main axis of the bearing, and the bearing stand (2) has two supporting arms (11) arranged at a distance from one another, between which the bearing housing (1) is arranged and on which the spring elements are supported, **characterized in that** the spring elements are flexural rods (12), which extend parallel to the main axis of the bearing and on which the bearing housing is supported radially to the longitudinal axis thereof.

2. Rotor bearing arrangement according to claim 1, **characterized in that** the stiffness of the bearing stand (2) is considerably greater than the stiffness of the support formed by the spring elements of the bearing housing (1).

3. Rotor bearing arrangement according to either claim 1 or claim 2, **characterized in that** the bearing housing (1) is supported on each supporting arm (11) of the bearing stand (2) by means of two flexural rods (12) which are arranged at a distance from one another.

4. Rotor bearing arrangement according to any one of the preceding claims, **characterized in that** the supporting arms (11) have at their ends carrier plates (13), which are arranged so as to be parallel and symmetrical about the center plane of the bearing at right angles to the main axis of the bearing, and which accommodate end portions (16) of the flexural rods (12) in holes (15) parallel to the main axis of the bearing, the flexural rods (12) bridging gaps between the carrier plates (13).

5. Rotor bearing arrangement according to any one of the preceding claims, **characterized in that** there are provided pairs of clamping plates (18, 19) which are fixed on the bearing housing (1) and between which center portions (17) of the flexural rods (12) are clamped.

6. Rotor bearing arrangement according to any one of the preceding claims, **characterized in that** in the bearing housing (1) there is arranged a bearing ring (5), which has a bearing bore (6) for receiving the rotor, has a spherical outer surface, and is mounted in a spherical bearing surface of the bearing housing (1) so as to be rotatable with respect to the center point of the bearing.

7. Rotor bearing arrangement according to claim 6, **characterized in that** the spherical bearing arrangement of the bearing ring (5) is formed as a hydrostatic plain bearing.

## Revendications

1. Palier de rotor pour un banc d'équilibrage, comportant un logement de palier (1) avec un axe principal de palier horizontal, ledit logement de palier (1) prenant appui de manière radialement flexible dans un support de palier (2) à rigidité élevée, au moyen d'au moins deux éléments ressort conçus et agencés de manière identique, les éléments ressort étant disposés sur des côtés opposés du logement de palier (1) symétriquement à un plan contenant l'axe principal du palier, et le support de palier (2) ayant deux bras de support (11), situés à distance l'un de l'autre, entre lesquels est agencé le logement de palier (1) et sur lesquels prennent appui les éléments ressort, **caractérisé en ce que** les éléments ressort sont des tiges de flexion (12) qui s'étendent parallèlement à l'axe principal du palier et sur lesquelles le logement de palier prend appui radialement par rapport à leur axe longitudinal.

2. Palier de rotor selon la revendication 1, **caractérisé en ce que** la rigidité du support de palier (2) est nettement supérieure à la rigidité de l'appui pour le logement de palier (1) formé par les éléments ressort.

3. Palier de rotor selon la revendication 1 ou 2, **caractérisé en ce que** le logement de palier (1) est en appui contre chaque bras de support (11) du support de palier (2) au moyen de deux tiges de flexion (12) agencées à distance l'une de l'autre.

4. Palier de rotor selon l'une des revendications précédentes, **caractérisé en ce que** les bras de support (11) comportent, au niveau de leurs extrémités, des plaques support (13) qui sont parallèles et (1) disposées symétriquement au plan médian du palier perpendiculaire à l'axe principal du palier et qui, dans des forures (15) parallèles à l'axe principal du palier, reçoivent les zones d'extrémité (16) des tiges de flexion (12), lesdites tiges de flexion (12) franchissant des espaces intermédiaires entre les plaques de support (13).

5. Palier de rotor selon l'une des revendications précédentes, **caractérisé en ce qu'**il est prévu des paires de plaques de serrage (18, 19) qui sont fixées au logement de palier (1) et entre lesquelles sont fixés par serrage des tronçons centraux (17) des tiges de flexion (12).

6. Palier de rotor selon l'une des revendications précédentes, **caractérisé en ce que** dans le logement de palier (1) est agencée une bague de palier (5) qui comporte une forure (6), destinée à recevoir le rotor, et une surface extérieure sphérique et qui est montée rotative dans une surface de palier, sphérique par rapport au centre du palier, du logement de palier (1).

7. Palier de rotor selon la revendication 6, **caractérisé en ce que** le logement sphérique de la bague de palier (5) est réalisé sous la forme d'un palier à glissement hydrostatique.
